# FASCICULE DE BREVET EUROPEEN

(11) **EP 2 651 673 B1**
(45) Date de publication et mention de la délivrance du brevet: **03.09.2014**
(21) Numéro de dépôt: 11784989.3
(22) Date de dépôt: 14.11.2011
(51) Int. Cl.: B60H 1/32, B60H 1/00

(54) **SYSTÈME ET PROCÉDÉ DE COMMANDE D'UN SYSTÈME DE CLIMATISATION POUR VÉHICULE AUTOMOBILE**
SYSTEM UND VERFAHREN ZUR STEUERUNG EINES KLIMAANLAGENSYSTEMS FÜR EIN KRAFTFAHRZEUG
SYSTEM AND METHOD FOR CONTROLLING AN AIR CONDITIONING SYSTEM FOR A MOTOR VEHICLE

(30) Priorité: 16.12.2010 FR 1060636
(43) Date de publication de la demande: 23.10.2013
(73) Titulaire: Renault S.A.S., 92100 Boulogne-Billancourt (FR)
(72) Inventeur: BRAUNSCHWEIG, Vincent, F-92260 Fontenay Aux Roses (FR); DENIAUD, Nicolas, F-78640 Saint Germain De La Grange (FR); LE-LAY, Vincent, F-78114 Magny Les Hameaux (FR)
(86) Numéro de dépôt international: PCT/EP2011/070074
(87) Numéro de publication internationale: WO 2012/079885

(56) Documents cités:
- WO-A1-2009/029205
- DE-A1-102007 030 954
- US-A1- 2003 201 097

## Description

Le domaine de l'invention concerne les systèmes de climatisation, et en particulier les systèmes de climatisation pour véhicules automobiles, du type comprenant un compresseur et un organe de chauffage.

Plus particulièrement, l'invention concerne un système de climatisation pour véhicule automobile électrique.

Des systèmes de climatisation pour véhicules électriques sont déjà connus dans l'état de la technique. Contrairement aux véhicules à moteurs thermiques pour lesquels la consommation en énergie électrique est un facteur moins limitant et qui par ailleurs fournissent en fonctionnement suffisamment de chaleur pour chauffer l'habitacle, les véhicules électriques doivent être dotés de composants spécifiques, tels que des composants à coefficient de température positif (CTP) ou des compresseurs dédiés, alimentés à haute tension.

Le document WO 9415805 divulgue à cet égard un système de climatisation pour véhicule électrique comprenant une boucle froide munie d'un compresseur et une boucle chaude munie d'organes de chauffage. Bien que le système tienne compte de la nécessité de limiter la consommation en énergie électrique, les moyens mis en oeuvre sont essentiellement liés au réglage des paramètres de confort perceptibles par l'utilisateur. Aucune stratégie de limitation de puissance n'est réellement prise en considération. Tel est également le cas de la répartition de puissance entre le compresseur et les organes de chauffage.

On pourra également se référer au document US 6040561 qui divulgue, de manière générale, un système de commande du fonctionnement d'un véhicule automobile électrique, utilisant un réseau haute tension et un dispositif de contrôle de chauffage auxiliaire et dans lequel les relations entre l'organe de chauffage et le réseau de haute tension sont prises en compte. L'utilisation d'un compresseur n'est pas mentionnée.

Le document US2003/0201097 A1, qui est considéré comme l'état de la technique le plus proche, divulgue un système de commande d'un système de climatisation équipant un véhicule automobile comprenant un compresseur de climatisation et un organe de chauffage, ledit système comprenant un moyen d'élaboration d'une vitesse de rotation maximale du compresseur de climatisation en fonction de la température extérieure, de la pression de fluide frigorigène et de la puissance disponible. Il est cependant souhaitable de répartir de façon optimale la puissance disponible pour assurer le confort de l'utilisateur.

Il existe ainsi un besoin pour un système de commande d'un système de climatisation apte à répartir la puissance de façon à atteindre le confort pour les occupants du véhicule.

Il existe aussi un besoin pour un système de commande d'un système de climatisation apte à répartir la puissance de façon à en optimiser l'utilisation.

Il est donc proposé un système de commande d'un système de climatisation équipant un véhicule automobile comprenant un compresseur de climatisation et un organe de chauffage.

Le système de commande comprend un moyen d'élaboration d'une vitesse de rotation maximale du compresseur de climatisation en fonction de la température extérieure, de la pression de fluide frigorigène et de la puissance disponible, et un moyen d'élaboration d'un pourcentage de commande autorisé pour l'organe de chauffage en fonction de la température extérieure et de la puissance disponible.

Le système de commande peut comprendre une première cartographie de la puissance autorisée du compresseur en fonction de la température extérieure et de la puissance disponible.

Le moyen d'élaboration d'une vitesse de rotation maximale du compresseur de climatisation peut comprendre une deuxième cartographie de la vitesse de rotation maximale du compresseur de climatisation en fonction de la pression de fluide frigorigène et de la puissance autorisée du compresseur.

Le moyen d'élaboration d'un pourcentage de commande autorisé pour l'organe de chauffage peut comprendre une troisième cartographie d'un pourcentage de commande autorisé pour l'organe de chauffage en fonction de la puissance autorisée du compresseur et de la puissance disponible.

Le moyen d'élaboration d'un pourcentage de commande autorisé pour l'organe de chauffage peut comprendre un moyen d'élaboration de la puissance transférable du compresseur à l'organe de chauffage.

Le moyen d'élaboration d'une vitesse de rotation maximale du compresseur de climatisation peut comprendre un moyen d'élaboration de la puissance transférable de l'organe de chauffage au compresseur.

Il est également proposé, selon un autre aspect, un procédé de commande d'un système de climatisation équipant un véhicule automobile comprenant un compresseur de climatisation et un organe de chauffage, dans lequel on élabore une vitesse de rotation maximale du compresseur de climatisation en fonction de la température extérieure, de la pression de fluide frigorigène et de la puissance disponible, et on élabore un pourcentage de commande autorisé pour l'organe de chauffage en fonction de la température extérieure et de la puissance disponible.

On peut déterminer par cartographie la puissance autorisée du compresseur en fonction de la température extérieure et de la puissance disponible.

L'élaboration d'une vitesse de rotation maximale du compresseur de climatisation peut comprendre une détermination par cartographie de la vitesse de rotation maximale du compresseur de climatisation en fonction de la pression de fluide frigorigène et de la puissance autorisée du compresseur.

L'élaboration d'un pourcentage de commande autorisé pour l'organe de chauffage peut comprendre une détermination par cartographie d'un pourcentage de commande autorisé pour l'organe de chauffage en fonction de la puissance autorisée du compresseur et de la puissance disponible.

L'élaboration d'un pourcentage de commande autorisé pour l'organe de chauffage peut comprendre une élaboration de la puissance transférable du compresseur à l'organe de chauffage.

L'élaboration d'une vitesse de rotation maximale du compresseur de climatisation peut comprendre une élaboration de la puissance transférable de l'organe de chauffage au compresseur.

D'autres buts, caractéristiques et avantages apparaîtront à la lecture de la description suivante donnée uniquement en tant qu'exemple non limitatif et faite en référence aux dessins annexés sur lesquels :
- la figure 1 illustre un système de commande d'un système de climatisation selon un premier mode de réalisation, et
- la figure 2 illustre un système de commande d'un système de climatisation selon un deuxième mode de réalisation.

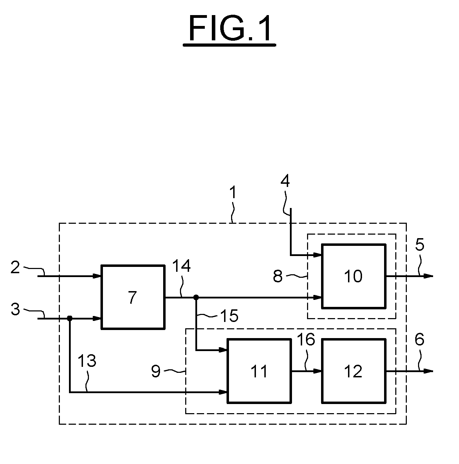

Sur la figure 1, on peut voir un système de commande 1 d'un système de climatisation comprenant une première entrée 2 portant la température extérieure, et une deuxième entrée 3 portant la puissance disponible.

Le système de climatisation considéré ici comprend un circuit de climatisation également appelé circuit de production d'air froid et un circuit de chauffage. Le circuit de production d'air froid est commandé notamment par l'intermédiaire du compresseur. Le circuit de chauffage est commandé par l'intermédiaire des organes de chauffage. Par puissance disponible, on entend la puissance autorisée pour le confort thermique. Cette puissance dépend notamment de l'état de charge de la batterie haute tension et des défauts présents sur le réseau haute tension.

Le système de commande 1 comprend une troisième entrée 4 portant la pression de fluide frigorigène utilisé dans le circuit de climatisation, en l'espèce du fréon, une première sortie 5 portant la vitesse de rotation maximale du compresseur de climatisation, et une deuxième sortie 6 portant le pourcentage de commande autorisé pour l'organe de chauffage. La vitesse de rotation maximale du compresseur de climatisation permet de saturer la commande du compresseur faisant partie de la régulation de la température d'évaporateur. Le pourcentage de commande autorisé pour l'organe de chauffage permet de saturer la commande de l'organe de chauffage faisant partie de la régulation de température d'eau.

Le système de commande 1 comprend une première cartographie 7 reliée en entrée à la première entrée 2 et à la deuxième entrée 3. La première cartographie 7 émet en sortie une fraction de puissance allouée au compresseur en fonction de la température extérieure et de la puissance disponible. Cette première cartographie permet de répartir une partie de la puissance disponible pour le compresseur de climatisation, l'autre partie étant dévolue à l'organe de chauffage. Selon les conditions climatiques représentées par la température extérieure, plus ou moins de puissance sera allouée à la climatisation ou au chauffage.

Le système de commande comprend un moyen d'élaboration 8 d'une vitesse de rotation maximale du compresseur de climatisation et un moyen d'élaboration 9 d'un pourcentage de commande autorisé reliés respectivement à la sortie 5 et à la sortie 6.

Le moyen d'élaboration 9 d'un pourcentage de commande autorisé est relié en entrée à la sortie 14 de la première cartographie 7 par une dérivation 15 et à l'entrée 3 par une dérivation 13.

Le moyen d'élaboration 9 d'un pourcentage de commande autorisé comprend un premier soustracteur 11 réalisant la soustraction de la fraction de puissance allouée au compresseur de la première cartographie 7 de la puissance disponible reçue de l'entrée 3.

Le premier soustracteur 11 émet en sortie, une fraction de puissance allouée à l'organe de chauffage qui est reçue par une deuxième cartographie 12 à travers la connexion 16. Dans ce cas, on assimile la fraction de puissance allouée à l'organe de chauffage à la puissance autorisée pour l'organe de chauffage. La deuxième cartographie 12 convertit la valeur de puissance autorisée pour l'organe de chauffage en pourcentage de commande maximum autorisé pour l'organe de chauffage. Ce pourcentage maximum est ensuite utilisé pour saturer la commande de l'organe de chauffage issue de la régulation de température d'eau.

Le moyen d'élaboration 8 d'une vitesse de rotation maximale du compresseur de climatisation est par ailleurs connecté en entrée à la sortie 14 de la première cartographie 7 et à la troisième entrée 4.

Le moyen d'élaboration 8 d'une vitesse de rotation maximale du compresseur de climatisation comprend une troisième cartographie 10 permettant de déterminer la vitesse de rotation maximale du compresseur de climatisation en fonction de la pression de fréon reçue de l'entrée 4 et de la puissance autorisée du compresseur. Dans ce cas, on assimile la fraction de puissance allouée au compresseur reçue de la première cartographie 7 par la connexion 14 à la puissance autorisée pour le compresseur. La troisième cartographie 10 est connectée en sortie à la sortie 5. La prise en compte de la pression de fréon permet d'améliorer la précision de la cartographie.

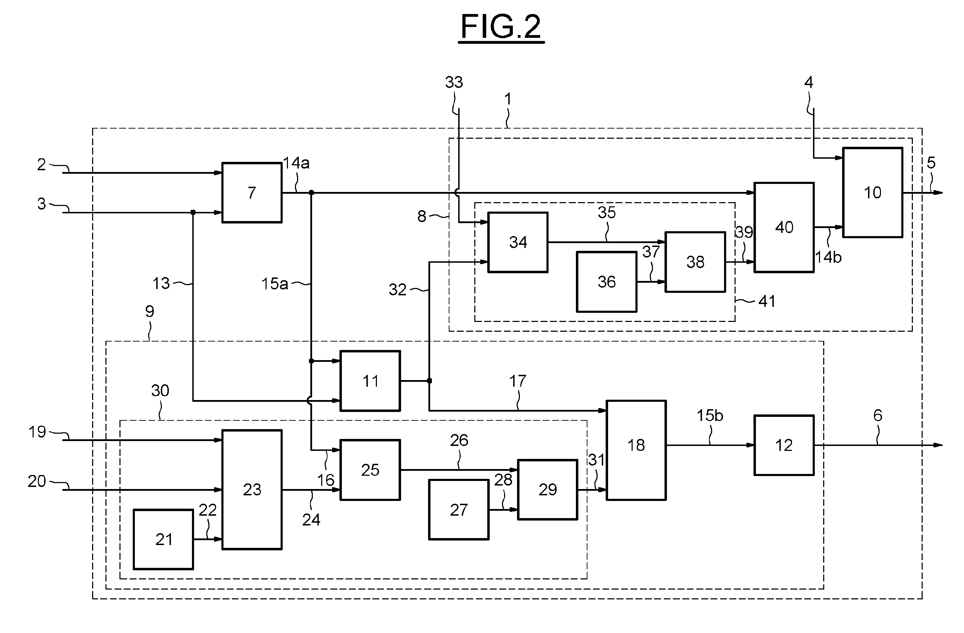

Sur la figure 2, on peut voir un autre mode de réalisation d'un système de commande de système de climatisation. Les éléments communs avec le premier mode de réalisation illustré par la figure 1 portent les mêmes références.

Le système de commande 1 d'un système de climatisation comprend une première entrée 2 portant la température extérieure, et une deuxième entrée 3 portant la puissance disponible.

Le système de commande 1 comprend une troisième entrée 4 portant la pression de fréon, une première sortie 5 portant la vitesse de rotation maximale du compresseur de climatisation, et une deuxième sortie 6 portant le pourcentage de commande autorisé pour l'organe de chauffage.

Le système de commande 1 comprend une première cartographie 7 reliée en entrée à la première entrée 2 et à la deuxième entrée 3. La première cartographie 7 émet en sortie une fraction de puissance allouée au compresseur en fonction de la température extérieure et de la puissance disponible.

Le système de commande comprend un moyen d'élaboration 8 d'une vitesse de rotation maximale du compresseur de climatisation et un moyen d'élaboration 9 d'un pourcentage de commande autorisé reliés respectivement à la sortie 5 et à la sortie 6.

Le moyen d'élaboration 9 d'un pourcentage de commande autorisé est relié en entrée à la sortie 14a de la première cartographie 7 par une dérivation 15a et à l'entrée 3 par une dérivation 13.

Le moyen d'élaboration 9 d'un pourcentage de commande autorisé comprend un premier soustracteur 11 réalisant la soustraction de la fraction de puissance allouée au compresseur reçue de la première cartographie 7 de la puissance disponible reçue de l'entrée 3.

Le premier soustracteur 11 émet en sortie, une valeur de différence de fraction de puissance allouée à l'organe de chauffage qui est reçue par un premier sommateur 18 par la connexion 17. Le premier sommateur 18 est relié en sortie par la connexion 15b à la deuxième cartographie 12.

Le moyen d'élaboration 9 d'un pourcentage de commande autorisé comprend également un moyen d'élaboration 30 de la puissance transférable du compresseur à l'organe de chauffage comprenant un commutateur 23 recevant sur une entrée une valeur de puissance consommée par le compresseur portée par la connexion 19, et sur une autre entrée une valeur nulle mémorisée dans une mémoire 21. La borne de commande du commutateur 23 reçoit une valeur logique de configuration portée par la connexion 20. Ainsi, si le véhicule est équipé d'un système de climatisation, le commutateur 23 connecte sa sortie à la connexion 19, sinon il connecte sa sortie à la connexion 22 le reliant à la mémoire 21.

Un deuxième soustracteur 25 est relié par une connexion 24 à la sortie du commutateur 23 et à la première cartographie 7 par des connexions et dérivations (14a, 15a, 16). Le deuxième soustracteur 25 émet en sortie la différence entre la fraction de puissance allouée au compresseur et la valeur reçue du commutateur 23. Cette différence reflète l'écart entre la valeur de puissance consommée par le compresseur et la fraction de puissance allouée au compresseur.

La sortie du deuxième soustracteur 25 est reliée à un premier comparateur 29 par la connexion 26. Le premier comparateur 29 est relié par une autre entrée par une connexion 28 à une mémoire 27 contenant la valeur zéro. Le premier comparateur 29 détermine alors si la différence de puissance reçue du deuxième soustracteur 25 est positive ou non. La différence de puissance est transmise en sortie si elle est positive, sinon la valeur zéro est émise. Le premier comparateur 29 est relié en sortie au premier sommateur 18 par la connexion 3 1.

La valeur émise en sortie du premier comparateur 29 est ainsi sommée à la valeur reçue du premier soustracteur 11, la somme des deux valeurs étant utilisée pour déterminer le pourcentage de commande maximum autorisé pour l'organe de chauffage par l'intermédiaire de la deuxième cartographie 12. Il apparaît ainsi, que le moyen d'élaboration 30 de la puissance transférable du compresseur à l'organe de chauffage n'est actif que dans les cas où la fraction de puissance allouée au compresseur est supérieure à la puissance consommée par le compresseur. Il apparaît également que la puissance inutilisée par le compresseur est affectée à l'organe de chauffage. Ainsi, l'organe de chauffage respecte la puissance qui lui est allouée par la première cartographie 7, tout en maximisant l'utilisation de la puissance allouée au système de climatisation.

Le moyen d'élaboration 8 d'une vitesse de rotation maximale du compresseur de climatisation est connecté en entrée à la sortie 14a de la première cartographie 7 et à la troisième entrée 4.

Le moyen d'élaboration 8 d'une vitesse de rotation maximale du compresseur de climatisation comprend également un moyen d'élaboration 41 de la puissance transférable de l'organe de chauffage au compresseur comprenant un troisième soustracteur 34 qui émet en sortie la différence entre la fraction de puissance allouée à l'organe de chauffage reçue en entrée par une dérivation 32 de la connexion 17 et la puissance consommée par l'organe de chauffage reçue de la connexion 33.

Le troisième soustracteur 34 est relié en sortie à un deuxième comparateur 38 par la connexion 35. Le deuxième comparateur 38 est relié par une autre entrée par une connexion 37 à une mémoire 36 contenant la valeur zéro. Le deuxième comparateur 38 détermine alors si la différence de puissance reçue du troisième soustracteur 34 est positive ou non. La différence de puissance est transmise en sortie si elle est positive, sinon la valeur zéro est émise. Le deuxième comparateur 38 est relié en sortie au deuxième sommateur 40 qui additionne la différence de puissance à la fraction de puissance allouée au compresseur reçue de la première cartographie 7. Le deuxième sommateur 40 émet en sortie la puissance autorisée du compresseur par la connexion 14b à destination de la troisième cartographie 10.

La troisième cartographie 10 permet de déterminer la vitesse de rotation maximale du compresseur de climatisation en fonction de la pression de fréon reçue de l'entrée 4 et de la puissance autorisée du compresseur par la connexion 14b. La troisième cartographie 10 est connectée en sortie à la sortie 5.

Il apparaît ainsi, que le moyen d'élaboration 41 de la puissance transférable de l'organe de chauffage au compresseur n'est actif que dans les cas où la fraction de puissance allouée à l'organe de chauffage est supérieure à la puissance consommée par l'organe de chauffage. Il apparaît également que la puissance inutilisée par l'organe de chauffage est affectée au compresseur. Ainsi, le compresseur respecte la puissance qui lui est allouée par la première cartographie 7, tout en maximisant l'utilisation de la puissance allouée au système de climatisation.

Le système de commande d'un système de climatisation permet de répartir la puissance disponible pour le système de climatisation entre le compresseur d'un circuit de climatisation et l'organe de chauffage d'un circuit de chauffage.

Le système de commande permet également de transférer à l'organe de chauffage la puissance allouée au compresseur mais inutilisée. Il est possible de même d'affecter au compresseur la puissance allouée à l'organe de chauffage mais inutilisée.

Le système de commande permet ainsi d'augmenter le taux d'utilisation de la puissance allouée au système de climatisation et d'améliorer le confort des utilisateurs.

## Revendications

1. Système de commande d'un système de climatisation équipant un véhicule automobile comprenant un compresseur de climatisation et un organe de chauffage, ledit système comprenant un moyen d'élaboration (8) d'une vitesse de rotation maximale du compresseur de climatisation en fonction de la température extérieure, de la pression de fluide frigorigène et de la puissance disponible, **caractérisé en ce que** ledit système comprend de plus un moyen d'élaboration (9) d'un pourcentage de commande autorisé pour l'organe de chauffage en fonction de la température extérieure et de la puissance disponible.

2. Système de commande selon la revendication 1, comprenant une première cartographie (7) de la puissance autorisée du compresseur en fonction de la température extérieure et de la puissance disponible.

3. Système de commande selon la revendication 2, dans lequel le moyen d'élaboration (8) d'une vitesse de rotation maximale du compresseur de climatisation comprend une deuxième cartographie (10) de la vitesse de rotation maximale du compresseur de climatisation en fonction de la pression de fluide frigorigène et de la puissance autorisée du compresseur.

4. Système de commande selon l'une quelconque des revendications 2 ou 3, dans lequel le moyen d'élaboration (9) d'un pourcentage de commande autorisé pour l'organe de chauffage comprend une troisième cartographie (12) d'un pourcentage de commande autorisé pour l'organe de chauffage en fonction de la puissance autorisée du compresseur et de la puissance disponible.

5. Système de commande selon l'une quelconque des revendications 2 à 4, dans lequel le moyen d'élaboration (9) d'un pourcentage de commande autorisé pour l'organe de chauffage comprend un moyen d'élaboration (30) de la puissance transférable du compresseur à l'organe de chauffage.

6. Système de commande selon l'une quelconque des revendications 2 à 5, dans lequel le moyen d'élaboration (8) d'une vitesse de rotation maximale du compresseur de climatisation comprend un moyen d'élaboration (41) de la puissance transférable de l'organe de chauffage au compresseur.

7. Procédé de commande d'un système de climatisation équipant un véhicule automobile comprenant un compresseur de climatisation et un organe de chauffage dans lequel on élabore une vitesse de rotation maximale du compresseur de climatisation en fonction de la température extérieure, de la pression de fluide frigorigène et de la puissance disponible, et on élabore un pourcentage de commande autorisé pour l'organe de chauffage en fonction de la température extérieure et de la puissance disponible.

8. Procédé de commande selon la revendication 7, dans lequel on détermine par cartographie la puissance autorisée du compresseur en fonction de la température extérieure et de la puissance disponible.

9. Procédé de commande selon la revendication 8, dans lequel l'élaboration d'une vitesse de rotation maximale du compresseur de climatisation comprend une détermination par cartographie de la vitesse de rotation maximale du compresseur de climatisation en fonction de la pression de fluide frigorigène et de la puissance autorisée du compresseur.

10. Procédé de commande selon l'une quelconque des revendications 8 ou 9, dans lequel l'élaboration d'un pourcentage de commande autorisé pour l'organe de chauffage comprend une détermination par cartographie d'un pourcentage de commande autorisé pour l'organe de chauffage en fonction de la puissance autorisée du compresseur et de la puissance disponible.

11. Procédé de commande selon l'une quelconque des revendications 8 à 10, dans lequel l'élaboration d'un pourcentage de commande autorisé pour l'organe de chauffage comprend une élaboration de la puissance transférable du compresseur à l'organe de chauffage.

12. Procédé de commande selon l'une quelconque des revendications 8 à 11, dans lequel l'élaboration d'une vitesse de rotation maximale du compresseur de climatisation comprend une élaboration de la puissance transférable de l'organe de chauffage au compresseur.

## Patentansprüche

1. Steuerungssystem eines Klimaanlagensystems, mit dem ein Kraftfahrzeug ausgestattet ist, umfassend einen Klimakompressor und ein Heizelement, wobei das System ein Bestimmungsmittel (8) einer maximalen Umdrehungsgeschwindigkeit des Klimakompressors in Abhängigkeit von der Außentemperatur, des Kühlmitteldruckes und der verfügbaren Leistung umfasst, **dadurch gekennzeichnet, dass** das System darüber hinaus ein Bestimmungsmittel (9) eines Steuerungsprozentsatzes umfasst, der für das Heizelement in Abhängigkeit von der Außentemperatur und der verfügbaren Leistung zulässig ist.

2. Steuerungssystem nach Anspruch 1, eine erste Motorabbildung (7) der zulässigen Leistung des Kompressors in Abhängigkeit von der Außentemperatur und der verfügbaren Leistung umfassend.

3. Steuerungssystem nach Anspruch 2, wobei das Bestimmungsmittel (8) einer maximalen Umdrehungsgeschwindigkeit des Klimakompressors eine zweite Motorabbildung (10) der maximalen Umdrehungsgeschwindigkeit des Klimakompressors in Abhängigkeit vom Kühlmitteldruck und der zulässigen Leistung des Kompressors umfasst.

4. Steuerungssystem nach irgendeinem der Ansprüche 2 oder 3, wobei das Bestimmungsmittel (9) eines für das Heizelement zulässigen Steuerungsprozentsatzes eine dritte Motorabbildung (12) eines für das Heizelement zulässigen Steuerungsprozentsatzes in Abhängigkeit von der zulässigen Leistung des Kompressors und der verfügbaren Leistung umfasst.

5. Steuerungssystem nach irgendeinem der Ansprüche 2 bis 4, wobei das Bestimmungsmittel (9) eines für das Heizelement zulässigen Steuerungsprozentsatzes ein Bestimmungsmittel (30) der vom Kompressor zum Heizelement übertragbaren Leistung umfasst.

6. Steuerungssystem nach irgendeinem der Ansprüche 2 bis 5, wobei das Bestimmungsmittel (8) einer maximalen Umdrehungsgeschwindigkeit des Klimakompressors ein Bestimmungsmittel (41) der vom Heizelement zum Kompressor übertragbaren Leistung umfasst.

7. Steuerungsverfahren eines Klimaanlagensystems, mit dem ein Kraftfahrzeug ausgestattet ist, umfassend einen Klimakompressor und ein Heizelement, wobei eine maximale Umdrehungsgeschwindigkeit des Klimakompressors in Abhängigkeit von der Außentemperatur, des Kühlmitteldruckes und der verfügbaren Leistung bestimmt wird und ein Steuerungsprozentsatz bestimmt wird, der für das Heizelement in Abhängigkeit von der Außentemperatur und der verfügbaren Leistung zulässig ist.

8. Steuerungsverfahren nach Anspruch 7, wobei die zulässige Leistung des Kompressors in Abhängigkeit von der Außentemperatur und der verfügbaren Leistung durch eine Motorabbildung bestimmt wird.

9. Steuerungsverfahren nach Anspruch 8, wobei die Bestimmung einer maximalen Umdrehungsgeschwindigkeit des Klimakompressors eine Bestimmung durch eine Motorabbildung der maximalen Umdrehungsgeschwindigkeit des Klimakompressors in Abhängigkeit von dem Kühlmitteldruck und der zulässigen Leistung des Kompressors umfasst.

10. Steuerungsverfahren nach irgendeinem der Ansprüche 8 oder 9, wobei die Bestimmung eines für das Heizelement zulässigen Steuerungsprozentsatzes eine Bestimmung durch eine Motorabbildung eines für das Heizelement zulässigen Steuerungsprozentsatzes in Abhängigkeit von der zulässigen Leistung des Kompressors und der verfügbaren Leistung umfasst.

11. Steuerungsverfahren nach irgendeinem der Ansprüche 8 bis 10, wobei die Bestimmung eines für das Heizelement zulässigen Steuerungsprozentsatzes eine Bestimmung der vom Kompressor zum Heizelement übertragbaren Leistung umfasst.

12. Steuerungsverfahren nach irgendeinem der Ansprüche 8 bis 11, wobei die Bestimmung einer maximalen Umdrehungsgeschwindigkeit des Klimakompressors eine Bestimmung der vom Heizelement zum Kompressor übertragbaren Leistung umfasst.

## Claims

1. System for controlling an air conditioning system fitted to a motor vehicle comprising an air conditioning compressor and a heating member, said system comprising a means (8) for formulating a maximum rotation speed of the air conditioning compressor as a function of the outside temperature, of the coolant pressure and of the available power, **characterized in that** said system further comprises a means (9) for formulating a control percentage authorized for the heating member as a function of the outside temperature and of the available power.

2. Control system according to Claim 1, comprising a first mapping (7) of the authorized power of the compressor as a function of the outside temperature and of the available power.

3. Control system according to Claim 2, wherein the means (8) for formulating a maximum rotation speed of the air conditioning compressor comprises a second mapping (10) of the maximum rotation speed of the air conditioning compressor as a function of the coolant pressure and of the authorized power of the compressor.

4. Control system according to either one of Claims 2 and 3, wherein the means (9) for formulating an authorized control percentage for the heating member comprises a third mapping (12) of an authorized control percentage for the heating member as a function of the authorized power of the compressor and of the available power.

5. Control system according to any one of Claims 2 to 4, wherein the means (9) for formulating an authorized control percentage for the heating member comprises a means (30) for formulating the power that can be transferred from the compressor to the heating member.

6. Control system according to any one of Claims 2 to 5, wherein the means (8) for formulating a maximum rotation speed of the air conditioning compressor comprises a means (41) for formulating the power that can be transferred from the heating member to the compressor.

7. Method for controlling an air conditioning system fitted to a motor vehicle comprising an air conditioning compressor and a heating member wherein a maximum rotation speed of the air conditioning compressor is formulated as a function of the outside temperature, of the coolant pressure and of the available power, and an authorized control percentage for the heating member is formulated as a function of the outside temperature and of the available power.

8. Control method according to Claim 7, wherein the authorized power of the compressor is determined by mapping as a function of the outside temperature and of the available power.

9. Control method according to Claim 8, wherein the formulation of a maximum rotation speed of the air conditioning compressor comprises a determination by mapping of the maximum rotation speed of the air conditioning compressor as a function of the coolant pressure and of the authorized power of the compressor.

10. Control method according to either one of Claims 8 and 9, wherein the formulation of an authorized control percentage for the heating member comprises a determination by mapping of an authorized control percentage for the heating member as a function of the authorized power of the compressor and of the available power.

11. Control method according to any one of Claims 8 to 10, wherein the formulation of an authorized control percentage for the heating member comprises a formulation of the power that can be transferred from the compressor to the heating member.

12. Control method according to any one of Claims 8 to 11, wherein the formulation of a maximum rotation speed of the air conditioning compressor comprises a formulation of the power that can be transferred from the heating member to the compressor.
